# EUROPEAN PATENT SPECIFICATION

(11) **EP 0 739 592 B1**
(45) Date of publication and mention of the grant of the patent: **10.01.2001**
(21) Application number: 96201021.1
(22) Date of filing: 16.04.1996
(51) Int. Cl.: A23D 9/00, A23L 1/30, A61K 31/23, C11C 3/04

(54) **Digestible fats**
Verdauliche Fette
Graisses digestibles

(30) Priority: 28.04.1995 EP 95302945
(43) Date of publication of application: 30.10.1996
(73) Proprietor: LODERS CROKLAAN B.V., 1521 AX Wormerveer (NL)
(72) Inventor: Cain, Frederick William, 2271 VL Voorburg (NL); Chandler, Ian Christopher, Rushden NN10 0EJ (GB); Quinlan, Paul Thomas, Kempston MK42 8TW (GB)
(74) Representative: Sikken, Antonius H. J. M.

(56) References cited:
- EP-A- 0 186 244
- EP-A- 0 209 176
- EP-A- 0 265 699
- EP-A- 0 271 909
- EP-A- 0 311 167
- EP-A- 0 577 371
- WO-A-94/10326
- WO-A-94/24889

## Description

Synthetic triglycerides comprising two different groups of fatty acid residues, i.e. fatty acids consisting of ω-3 unsaturated fatty acids and saturated fatty acids in the C₈-C₁₀ range, wherein the fatty acid residues of the saturated C₈-C₁₀ range are preferably bonded to the 1,3-positions, while the ω-3 fatty acids are preferably derived from plant oils, marine plankton oils, fungal oils or fish oils are known from US patent 4,871,768 (although this is contradictory to the disclosure in column 4, lines 7-10 of US 4,871,768, where it is stated that the saturated C₈-C₁₀ fatty acid residues are preferably bonded to adjacent carbon atoms). A prerequisite for these triglycerides is that at least one ω-3 fatty acid residue is present and at least one C₈-C₁₀ saturated fatty acid residue. Therefore, the maximum amount of ω-3 fatty acid residues is 66 wt.% (i.e. two of these residues are present) from which at least 50% is bonded at the 2-position.

The above-mentioned triglycerides can be used in enterally or parenterally administered compositions. The above-mentioned fats provide a means for the addition of fat calories while the fats do not give rise to problems in the reticulo-endothelial system and do not act as substrates for prostaglandin systems.

According to US 4,906,664, nutritional supports for patients suffering from cancer cachexia are obtained when the diet contains an amount of triglycerides containing medium-chain fatty acids and unsaturated ω-3 long-chain fatty acid.

In WO 92/19237, pharmaceutical compositions are disclosed that can be used in enteral preparations for treatment of lipid malabsorption. The lipids contain MLM-type triglycerides (M = medium-chain fatty acids C₆-C₁₃ and L = long-chain fatty acids C₁₄-C₂₄, e.g. unsaturated fatty acid residues). It is disclosed that the lipid absorption is greater for MLM than for randomized MLM triglycerides.

According to WO 91/09597, triglycerides that contain at least one C₂-C₅ fatty acid residue and at least one C₁₆-C₂₄ fatty acid residue can be used as a biological agent with effect on the intestinal mucosa.

From the above-mentioned references it can be concluded that fat absorption, and therefore the digestibility of a fat, is improved when the 1,3-positions in the fat are taken by medium-chain fatty acids. In our published patent application WO 94/24889 we have explained, that, if a graph were to be drawn, demonstrating the digestibility against the content of medium-chain fatty acids in the 1,3-positions, it would be expected that the digestibility of MLM fat (=M = medium-chain fatty acid) would be far better than that of LLL fats. Further, it is disclosed that the digestibility of fats comprising a mixture of M₂L and L₂M fats with an overall M content in the 1,3-position varying between 0 and 100% has a digestibility which is greater than expected in theory.

Although above fat mixtures display a considerable higher digestibility than expected, the digestibility is not yet optimal. Therefore we studied whether fats could be found that have a digestibility that is even higher than above prior art fats. An indication, that such fats might exist can be derived from EP 265 699, wherein it is disclosed that fats with a superior digestibility can be obtained, if the C₈-C₁₄ fatty acid groups are bonded at the 2-position, while fatty acids with C₁₈ or higher should be bonded at the 1.3-positions. So, on basis of above EP-document it should be expected that triglycerides LML should have the highest digestibility. In the examples of EP 265 699 fat compositions are disclosed, that contain both MML- and LML-triglycerides. As far as a ratio of these two triglycerides can be calculated from the data given in the tables, it can be concluded that these two components are present in weight ratios asymmetric : symmetric of maximum 1.5. We now found, that fats with even better digestibility can be obtained, if the weight ratio asymmetric : symmetric triglycerides in these fats is at least 1.75. This is unexpected as EP 265 699 teaches that LML should have the highest digestibility.

Therefore, we found triglyceride compositions having a digestibility that is higher than should be expected. These triglyceride compositions comprise fats derived from saturated medium/short-chain fatty acids and fats derived from long-chain unsaturated fatty acids, wherein the composition comprises :
1-99 wt.% of M₂L-type triglycerides and
99-1 wt.% of L₂M-type triglycerides,
   M being saturated fatty acid residues with 2-14 carbon atoms, preferably 6-14 carbon atoms;
   L being mono- or poly-unsaturated fatty acid residues with at least 18 carbon atoms, the fatty acid distribution of M being such that 35-99.5 mole %, preferably 40-80 mole %, of the total M present being bonded at the 2-position, while asymmetric and symmetric M₂L and L₂M triglycerides are present in a weight ratio asymmetric : symmetric of more than 1.75.

A preference is expressed for the application of a triglyceride composition according to the invention, wherein the amount of M₂L = 10-90 wt.%, in particular 20-80 wt% and the amount of L₂M = 90-10 wt.%, in particular 80-20 wt%.

Although M can range from 2-14 C-atoms, a preference is expressed for the use of saturated fatty acid residues having 8-12 C atoms.

As unsaturated fatty acid residue L, a great number of different unsaturated fatty acids can be applied. Examples thereof are oleic, linoleic, linolenic (both α and γ) and the poly unsaturated fatty acids having at least 20 C-atoms, such as DHA (= C_{22:6ω3}), E.P.A. (= C_{20:5ω3}), or arachidonic acid (= C_{20:4ω6}).

The highest digestibilities are found for triglyceride compositions wherein asymmetric : symmetric is at least 2.0, preferably at least 3.0.
The component MML is asymmetric and as a consequence it exists in different stereo isomeric forms. It was found, that the use of asymmetric triglycerides as a non-racemic mixture, (i.e. enriched in one of the possible enantiomers), prepared under the conditions, described in WO 94/10326, resulted in the highest digestibility. Therefore triglycerides enriched in one of the possible enantiomers by at least 10 wt%, preferably at by least 30 wt%, are preferred.

Although the above-mentioned triglycerides could be used *per se*, a preference is expressed for the application of blends of the above-mentioned fats with other fats. In these blends the presence is preferred of a structuring fat which makes it easier to apply the fats in food products.

Therefore, in another embodiment of the invention, we found blends of triglycerides comprising at least a fat A and a structuring fat B, wherein
fat A is a fat according to the invention which is present in 0.3-70 wt.%, preferably 5-45 wt%
fat B is a fat containing saturated fatty acid residues with 12-24 carbon atoms, its SAFA content being 20-80 wt.%, which fat B is present in amounts of 30-99.7 wt.%, preferably 55-95 wt%
The structuring properties of fat B are best when fat B displays a solid fat content at 20°C (NMR pulse, unstabilized) of more than 15, preferably more than 20.

Suitable fats B are obtained by blending fats C and D, wherein fat C has an (L₂S + L₃) level of more than 35 wt.%, preferably 35-85 wt% and fat D displays an N₂₀ > 30, L being as defined above, S being saturated fatty acid residues with 16-22 C atoms.

The preferred fats B which display the best structuring properties are fats B, wherein more than 25 wt.%, preferably 25-60 wt% of LS₂ is present (L and S as defined above).

Other suitable fats B have an (H₂M' + M'H₂) content of more than 60 wt.%, H being saturated fatty acid residue with ≥ 16 C-atoms, preferably 16-18 C-atoms, M' being saturated fatty acid residue with 8-14 C-atoms, preferably 12-14 C-atoms.

The blends very suitably should display SAFA levels of 20-40 wt.%, MUFA levels of 10-70 wt.% and PUFA levels of 10-70 wt.%, while simultaneously the ratio between ω-6 and ω-3 unsaturated fatty acids should vary from 2-20, preferably from 4-15.

The fats and fat blends according to the invention can be applied as a fat phase in food products, such as spreads, margarines, cream alternatives, chocolate, confectionery, bakery products, sauces, ice creams, table oils, dressings, mayonnaises, enteral or parenteral products, wherein the fat phase at least partly comprises a fat according to the invention.
The amount of fat in these products can vary between wide ranges, suitable amounts being 1-80 wt.%; however, the actual amount will depend largely on the food product.

The fats according to our invention can be made by applying enzymic conversions, e.g. as disclosed in GB 1,577,933. The starting materials have to be selected carefully. Sources for the medium-chain fatty acids are, e.g., palm kernel oils or coconut oils. Sources for the unsaturated long-chain fatty acids are, e.g., sunflower oil, high-oleic sunflower oil, soybean oil, rapeseed oil, borage, evening primrose oil, fish oil, safflower oil, linseed or oils derived from algal or fungal sources, such as Mortierella species. Chiral MML can be obtained according to the methods disclosed in WO 94/10326.

### EXAMPLES

### 1. Preparation of an MLM-rich fat

1.1 Glycerol (1.25 g) was reacted with decanoic anhydride (8.86 g) in the presence of dichloromethane (63 ml) and Rhizomucor miehei lipase (2.5 g supported lipase). The reaction was performed for 10 hrs at 20°C. The product mixture was filtered and cooled over dry-ice. The precipitate (1.3-dicaprin) was collected and recrystallized from acetone to yield 2.76 g purified diglyceride.
1.2 The diglyceride was reacted with 3.75 g linoleic anhydride in the presence of 60 ml dichloromethane and 4-N,N-dimethylaminopyridine (0.255 g). After 2 hrs at 20°C, the mixture was cooled over dry-ice and the product collected by filtration (yield 7.6 g). After purification over alumina 4.8 g of a pure product was obtained.
   From analysis we could conclude that this product contained 99% (M₂L + ML₂) comprising 73.8 wt% C_{10:0} and 26.1 wt% C_{18:2}, while hardly any C_{10:0} was present in the 2-position. The ratio MML : LML was 0.36.

### 2. Digestibility

The digestibility of the above MLM-fat was measured as follows:
1g of fat was added to 100 ml of an aqueous solution containing 0.261 g sodium taurodeoxycholate, 0.368 g calcium chloride and 0.877 g sodium chloride. An emulsion was formed by homogenisation and ultrasonication, and pH adjusted to 7.0. Hydrolysis of the emulsion was determined by addition of 20-50 µl of 1% solution of crude pancreatic lipase (Sigma Type II, buffered to pH 7) to 20 ml of the emulsion at 37-40°C. Fatty acid released by the lipase was neutralised by addition of sodium hydroxide to maintain a pH of 7.0. Rate of hydrolysis was calculated from the rate of reagent added. Mean slope was determined by linear regression in the time interval from 4 to 10 minutes after addition of enzyme. We found a digestibility of 107.
The digestibility of sunflower oil SF was measured by the same procedure (63% C_{18:2}; 24% C_{18:1}; %M in 1.3: 0%). We found a digestibility of 100.

### 3. Preparation of an MLL rich fat

3.1 To a solution of 1-monodecanoin (3.00g) and pyridine (2.84ml) in 15 ml hexane at 60°C was added dropwise a solution of linoleoyl chloride (8.86) in 22 ml hexane over 80 minutes. Reflux was continued for a further 2.5 hours after which 50 ml water was added and the mixture boiled for 3 minutes then cooled. The reaction mixture was extracted with 50 ml dichloromethane with repeated washing with 10% aqueous NaCl (250 ml). The lipid extract was dried over anhydrous sodium sulphate and eluted down 50 g of basic alumina with ethyl acetate to yield 9.66 g of purified product.
3.2 The digestibility of above fat was measured according to the technique disclosed in example 2. It was found to be 113.6.

### 4. Preparation of an interesterified LMM/LML-mixture.

4.1 Estasan ® MCT oil (10 g) was interesterified with 10 g of mixed free fatty acids (1 part high oleic sunflower acids, 1 part sunflower acids) with 1 g of SP392 catalyst. After 24 hours the catalyst was removed and the triglyceride isolated by elution down 100 g of basic alumina with ethyl acetate. This fat contained 40 wt% of MMM.
4.2 The digestibility was measured according to example 2. It was found to be 141.3.

### 5. Preparation of an LMM-rich fat

5.1 As example 3, except that 2.45 g of 1-monoolein, 2.25 ml pyridine, 100 ml hexane and 3.96 g of decanoyl chloride in 25 ml hexane were reacted over 40 minutes. Final yield of 4 g.
5.2 The digestibility was measured according to example 2. It was found to be 134.6.

### 6. Preparation of an LML-rich fat

1.3-diolein was obtained by fractionation of a mixture of 1.2 and 1.3 isomers of diolein from hexane (1 part solvent to 1 part oil) at -10°C. The procedure as used in examples 3 and 5 was followed except that 1.57 g 1,3-diolein, 1.5 ml pyridine in 100 ml hexane were reacted with 2.14 ml decanoyl chloride in 20 ml hexane over 45 minutes. Final yield of 1.67 g.
6.2 The digestibility of this fat was measured, as set out in example 2. It was found to be 120.

7. Above results and fat compositions can be summarized as follows:

| Fat of example | M₂L wt% | ML₂ wt% | Weight ratio asymm./symm. | Mole % of M in 2 | Digest |
|---|---|---|---|---|---|
| 1.2 | 98.6 | 0 | 0.43 | 15.2 | 107 |
| 3.1 | - | 99 | > 99 | 0 | 113.6 |
| 4.1 | 51.0 | 13 | 4.3 | 49.1 | 141.3 |
| 5.1 | 99.2 | 0 | 98.5 | 48.8 | 134.6 |
| 6.1 | 8.8 | 91.2 | 0.086 | 93.5 | 120 |

## Claims

1. Triglyceride composition comprising fats derived from saturated medium/short-chain fatty acids and fats derived from long-chain unsaturated fatty acids, wherein the composition comprises :
1-99 wt.% of M₂L-type triglycerides and
99-1 wt.% of L₂M-type triglycerides,
M being saturated fatty acid residues with 2-14 carbon atoms, preferably 6-14 carbon atoms;
L being mono- or poly-unsaturated fatty acid residues with at least 18 carbon atoms, the fatty acid distribution of M being such that 35-99.5 mole %, preferably 40-80 mole %, of the total M present being bonded at the 2-position, while asymmetric and symmetric M₂L and L₂M triglycerides are present in a weight ratio asymmetric : symmetric of more than 1.75.

2. Triglyceride composition according to Claim 1, wherein the amount of M₂L = 10-90 wt.% preferably 20-80 wt% and the amount of L₂M = 90-10 wt.%, preferably 80-20 wt%.

3. Triglyceride composition according to Claims 1-2, wherein
M is saturated C₈-C₁₂ fatty acid residue and
L is a mono- or poly-unsaturated C₁₈-fatty acid residue from oleic acid, linoleic acid or linolenic acid.

4. Triglyceride composition according to Claims 1-2, wherein L is a poly unsaturated fatty acid with at least 20 carbon atoms, preferably D.H.A. or E.P.A.

5. Triglyceride composition according to Claims 1 - 4, wherein the weight ratio asymmetric : symmetric is at least 2.0, preferably at least 3.0.

6. Triglyceride composition according to Claims 1 - 5, wherein the asymmetric triglycerides are present as a non-racemic mixture of optical enantiomers, preferably enriched in one of the possible enantiomers by at least 10 wt%.

7. Blend of triglycerides comprising at least a fat A and a structuring fat B, wherein
fat A is a fat according to Claims 1-6 and is present in 0.3-70 wt.%;
fat B is a fat containing saturated fatty acid residues with 12-24 carbon atoms, its SAFA content being 20-80 wt.%, which fat B is present in amounts of 30-99.7 wt.%.

8. Blend according to Claim 7, wherein fat B displays a solid fat content at 20°C (NMR pulse) of more than 15, preferably more than 20.

9. Blend according to Claim 7, wherein fat B is obtained by blending fats C and D, wherein fat C has an (L₂S + L₃) level of more than 35 wt.% and fat D displays an N₂₀ > 30, L being as defined in Claim 1, S being saturated fatty acid residues with 16-22 C atoms.

10. Blend according to Claim 9, wherein fat B has an LS₂ content of more than 25 wt.%.

11. Blend according to Claim 7, wherein fat B has an (H₂M' + M'₂H) content of more than 60 wt.%, H being saturated fatty acid residue with ≥ 16 C-atoms, preferably 16-18 C-atoms, M' being saturated fatty acid residue with 8-14 C-atoms, preferably 12-14 C-atoms.

12. Food products comprising at least a fat phase, such as spreads, margarines, cream alternatives, chocolate, confectionery, bakery products, sauces, ice creams, table oils, dressings, mayonnaises, enteral or parenteral products, wherein the fat phase at least partly comprises a fat according to Claims 1-11.

## Patentansprüche

1. Triglyceridzusammensetzung, umfassend Fette, die von gesättigten mittel-/kurzkettigen Fettsäuren abgeleitet sind, und Fette, die von langkettigen ungesättigten Fettsäuren abgeleitet sind, worin die Zusammensetzung umfaßt:
1-99 Gew.-% Triglyceride des M₂L-Typs und
99-1 Gew.-% Triglyceride des L₂M-Typs, wobei
M = gesättigte Fettsäurereste mit 2-14 C-Atomen, vorzugsweise 6-14 C-Atomen,
L = einfach oder mehrfach ungesättigte Fettsäurereste mit mindestens 18 C-Atomen, wobei die Fettsäureverteilung von M so bemessen ist, daß 35 bis 99,5 Mol-%, vorzugsweise 40 bis 80 Mol-%, des insgesamt vorliegenden M an die 2-Stellung gebunden sind, während asymmetrische und symmetrische M₂L- und L₂M-Triglyceride in einem Gewichtsverhältnis asymmetrisch zu symmetrisch von mehr als 1,75 vorliegen.

2. Triglyceridzusammensetzung nach Anspruch 1, worin die Menge an M₂L = 10 bis 90 Gew.-%, vorzugsweise 20 bis 80 Gew.-%, und die Menge an L₂M = 90 bis 10 Gew.-%, vorzugsweise 80 bis 20 Gew.-%, ist.

3. Triglyceridzusammensetzung nach den Ansprüchen 1 bis 2, worin
M = gesättigter C₈-C₁₂-Fettsäurerest und
L = einfach oder mehrfach ungesättigter C₁₈-Fettsäurerest aus Ölsäure, Linolsäure oder Linolensäure.

4. Triglyceridzusammensetzung nach den Ansprüchen 1 bis 2, worin L eine mehrfach ungesättigte Fettsäure mit mindestens 20 C-Atomen, vorzugsweise D.H.A. oder E.P.A., ist.

5. Triglyceridzusammensetzung nach den Ansprüchen 1 bis 4, worin das Gewichtsverhältnis asymmetrisch zu symmetrisch mindestens 2,0, vorzugsweise mindestens 3,0, ist.

6. Triglyceridzusammensetzung nach den Ansprüchen 1 bis 5, worin die asymmetrischen Triglyceride als eine nicht-racemische Mischung optischer Enantiomeren, vorzugsweise angereichert mit einem der möglichen Enantiomeren um mindestens 10 Gew.-%, vorliegen.

7. Gemisch von Triglyceriden, umfassend mindestens ein Fett A und ein Strukturierungsfett B, worin
Fett A ein Fett gemäß den Ansprüchen 1 bis 6 und vorliegend in einer Menge von 0,3 bis 70 Gew.-% ist; Fett B ein Fett ist, enthaltend gesättigte Fettsäurereste mit 12 bis 24 C-Atomen, dessen SAFA-Gehalt 20 bis 80 Gew.-% ist, welches Fett B in Mengen von 30 bis 99,7 Gew.-% vorliegt.

8. Gemisch nach Anspruch 7, worin Fett B einen Festfett-gehalt bei 20°C (NMR-Puls) von mehr als 15, vorzugsweise mehr als 20, zeigt.

9. Gemisch nach Anspruch 7, worin Fett B durch Mischen der Fette C und D erhalten ist, worin Fett C einen (L₂S + L₃)-Gehalt von mehr als 35 Gew.-% hat und Fett D einen N₂₀ > 30 zeigt, wobei L wie in Anspruch 1 definiert ist und S gesättigte Fettsäurereste mit 16 bis 22 C-Atomen bedeutet.

10. Gemisch nach Anspruch 9, worin Fett B einen LS₂-Gehalt von mehr als 25 Gew.-% aufweist.

11. Gemisch nach Anspruch 7, worin Fett B einen (H₂M' + M'₂H)-Gehalt von mehr als 60 Gew.-% aufweist, wobei H ein gesättigter Fettsäurerest mit ≥ 16 C-Atomen, vorzugsweise 16 bis 18 C-Atomen, ist und M' ein gesättigter Fettsäurerest mit 8 bis 14 C-Atomen, vorzugsweise 12 bis 14 C-Atomen, ist.

12. Nahrungsmittelprodukte, umfassend mindestens eine Fettphase, wie z.B. Brotaufstriche, Margarinen, Sahnealternativen, Schokolade, Süßwaren, Backwaren, Soßen, Eiscremes, Tafelöle, Dressings, Mayonnaisen, enterale oder parenterale Produkte, worin die Fettphase mindestens teilweise ein Fett gemäß den Ansprüchen 1 bis 11 umfaßt.

## Revendications

1. Composition de triglycérides comprenant des graisses dérivées d'acides gras saturés à chaîne moyenne/courte et des graisses dérivées d'acides gras insaturés à chaîne longue, la composition comprenant :
■ 1 à 99 % en poids de triglycérides du type M₂L et
■ 99 à 1 % en poids de triglycérides du type L₂M,
M étant des résidus d'acides gras avec 2 à 14 atomes de carbone, de préférence 6 à 14 atomes de carbone,
L étant des résidus d'acides gras mono ou poly insaturés avec au moins 18 atomes de carbone, la distribution d'acides gras de M étant telle que 35 à 99,5 moles % , de préférence 40 à 80 moles % de M total présent sont liées en position 2, alors que les triglycérides M₂L et L₂M asymétriques et symétriques sont présents en un rapport pondéral asymétriques/symétriques de plus de 1,75.

2. Composition de triglycérides selon la revendication 1, dans laquelle la quantité de M₂L = 10 à 90 % en poids, de préférence 20 à 80 % en poids et la quantité de L₂M = 90 à 10 % en poids, de préférence 80 à 20 % en poids.

3. Composition de triglycérides selon les revendications 1 et 2, dans laquelle :
M est un résidu d'acides gras en C₈₋₁₂ saturés et
L est un résidu d'acides gras en C₁₈ mono ou poly insaturés issus de l'acide oléique, de l'acide linoléique ou de l'acide linolénique.

4. Composition de triglycérides selon les revendications 1 et 2, dans laquelle L est un acide gras polyinsaturé avec au moins 20 atomes de carbone, de préférence DHA ou EPA.

5. Composition de triglycérides selon les revendications 1 à 4, dans laquelle le rapport pondéral asymétriques/symétriques est au moins 2,0, de préférence au moins 3,0.

6. Composition de triglycérides selon les revendications 1 à 5, dans laquelle les triglycérides asymétriques sont présents sous forme d'un mélange non racémique d'énantiomères optiques, de préférence enrichis en l'un des énantiomères possibles d'au moins 10 % en poids.

7. Mélange de triglycérides comprenant au moins une graisse A et une graisse B structurante, dans lequel
■ la graisse A est une graisse selon les revendications 1 à 6 et est présente à raison de 0,3 à 70 % en poids,
■ la graisse B est une graisse contenant des résidus d'acides gras avec 12 à 24 atomes de carbone, sa teneur en AGSA étant de 20 à 80 % en poids, cette graisse B étant présente en des quantités de 30 à 99,7 % en poids.

8. Mélange selon la revendication 7, dans lequel la graisse B montre une teneur en graisses solides à 20°C (impulsion RMN) de plus de 15, de préférence de plus de 20.

9. Mélange selon la revendication 7, dans lequel on obtient la graisse B en mélangeant des graisses C et D, la graisse C ayant une quantité de (L₂S + L₃) de plus de 35 % en poids et la graisse D montrant un N20 > 30, L étant comme défini dans la revendication 1, S étant des résidus d'acides gras saturés avec 16 à 22 atomes de carbone.

10. Mélange selon la revendication 9, dans lequel la graisse B a une teneur en LS₂ de plus de 25 % en poids.

11. Mélange selon la revendication 7, dans lequel la graisse B a une teneur en (H₂M' + M'₂H) de plus de 60 % en poids, H étant un résidu d'acides gras saturés avec 16 atomes de carbone ou plus, de préférence 16 à 18 atomes de carbone, M' étant un résidu d'acides gras saturés avec 8 à 14 atomes de carbone, de préférence 12 à 14 atomes de carbone.

12. Produits alimentaires comprenant au moins une phase grasse, comme les pâtes à tartiner, les margarines, les variantes de la crème, le chocolat, les confiseries, les produits boulangers, les sauces, les crèmes glacées, les huiles de table, les assaisonnements, les mayonnaises, les produits entériques ou parentéraux, dans lesquels la phase grasse comprend au moins partiellement une graisse selon les revendications 1 à 11.
